# EUROPEAN PATENT APPLICATION

(11) **EP 3 339 066 A1**
(43) Date of publication of application: **27.06.2018**
(21) Application number: 16382637.3
(22) Date of filing: 21.12.2016
(51) Int. Cl.: B60G 7/00, F16C 11/06, F16C 11/08

(54) **BALL JOINT**

(71) Applicant: Engineering Developments for Automotive Industry, S.L., 48430 Amorebieta-Etxano (Bizkaia) (ES)
(72) Inventor: MOSTEIRO GOYOAGA, Jose, Ramon, 48340 AMOREBIETA (BIZKAIA) (ES)
(74) Representative: Herrero & Asociados, S.L.

(57) **Abstract**

A ball joint (A) that comprises a housing (1) that comprises an upper body (1' ) and a lower body (1'') that are joined together, the seat assembly comprising an overpressed piece (2) that holds the spherical portion (A') of the ball joint (A), such that said overpressed piece (2) is located between said spherical portion (A') of the ball joint (A) and the inner faces of the upper body (1') and lower body (1'') of the housing (1).

## Description

### TECHNICAL FIELD OF THE INVENTION

The present invention is applicable to the mechanical industry and, more specifically, to the field of articulated joints of structural elements used especially in suspension systems of motor vehicles.

### BACKGROUND OF THE INVENTION

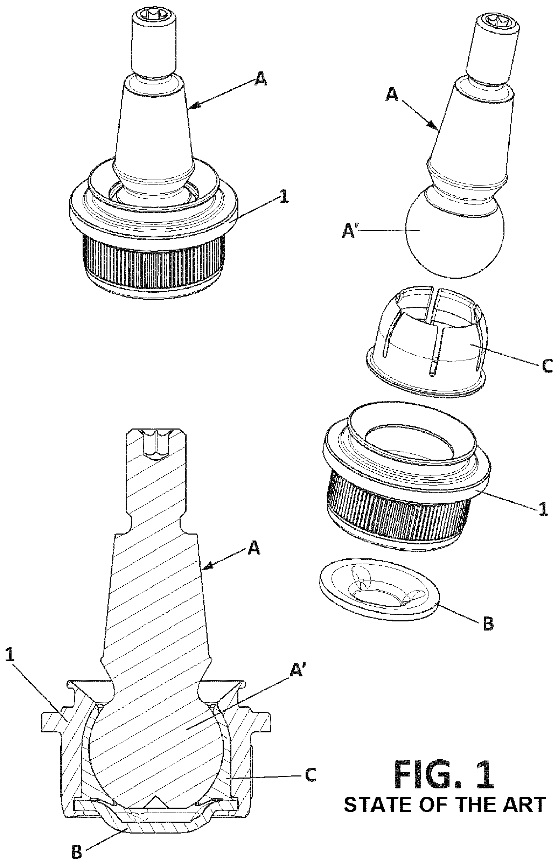

Currently, ball joints such as the one shown in figure 1, where a metal housing (1) is produced through machining operations that must be carried out both on its outer face and its inner face, are known. The material of the housing (1) is usually steel. This process is slow and costly.

To produce the seat, the ball joint (A) with an already fitted conventional plastic seat (C) is inserted into the lower portion of the housing (1). Next, a metal cup (B) is placed at the bottom and the edges of the housing (1) are secured in order to fasten the entire assembly.

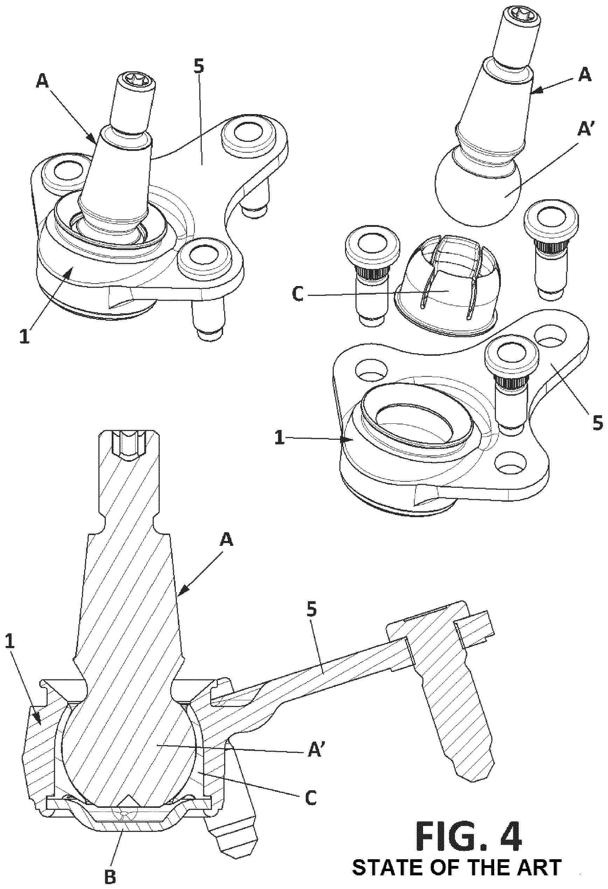

Similarly, there are cases in which the ball joint has an arm (5) that serves to arrange the complementary fastening means, as shown in figure 4.

This case only differs from that shown in figure 1 in that the housing (1) is formed by a body that is pressed, with the corresponding shape of the arm (5), to subsequently machine the housing both on its outer portion as well as on its inner portion, in order to house the spherical portion (A') of the ball joint (A).

The drawbacks of these ball joints include the slowness of the production process derived from the machining processes, which makes the whole process more expensive.

Likewise, it is necessary to have a stock of additional elements, such as a metal cup (B), which must be placed at the end of the process to hold the ball joint (A), with the resulting delay in the process, in addition to the risk of loss.

Lastly, given the configuration of the seat, the entire kinematic chain produced during the service life of the ball joint must be transmitted by the plastic conventional seat (C), which does not cover the bottom of the spherical portion (A') of the ball joint (A), such that in the end there may be gaps and blows that are produced due to contact between the ball joint (A) and the cup (B), with the resulting problems of premature wear and noises associated with it.

### DESCRIPTION OF THE INVENTION

A first aspect of the present invention relates to a ball joint, which streamlines and reduces the costs associated with its production process and extends its useful life.

The ball joint proposed by the invention comprises a metal housing, inside of which is housed, at least partially, a spherical portion that has the ball joint.

Thus, according to the invention, the housing comprises an upper body and a lower body that are joined together.

Likewise, the ball joint comprises an overpressed piece, obtained from an overpressed material, which holds the spherical portion of the ball joint, such that said overpressed piece is located between said spherical portion of the ball joint and the inner faces of the upper body and lower body of the housing.

Thus, it is not necessary to have a lower cup, since the overpressed piece holds the ball joint at the bottom. Furthermore, this overpressed piece absorbs, to a greater degree, the loads of the ball joint, thus meaning that premature wear on the seat is avoided, which in any case, as there is no lower cup, means neither noise nor blows can be produced. Furthermore, since the overpressed piece absorbs portion of the stresses, the housing is discharged in this way, such that it does not have to be so robust and it can be produced by machining.

It is envisaged that the ball joint comprises a plastic seat, the inner face of which is in contact with the spherical portion of the ball joint, such that the outer face of the plastic seat is in contact with the overpressed piece. Unlike the conventional seat of the state of the art, the plastic seat in the case of the invention is much thinner and does not absorb loads, but rather it only constitutes an appropriate sliding surface for the spherical portion of the ball joint. Furthermore, unlike the state of the art shown in figures 1 and 4, the plastic seat in the case of the invention completely surrounds the spherical portion of the ball joint, including at the bottom.

Likewise, the possibility of joining the upper body to the lower body of the housing by means of welding is envisaged. This ensures a sufficiently resistant joint between both parts of the housing.

A second aspect of the invention relates to a method for producing a ball joint such as the one previously described.

### DESCRIPTION OF THE DRAWINGS

As a complement to the description provided herein, and for the purpose of helping to make the characteristics of the invention more readily understandable, in accordance with a preferred practical embodiment thereof, said description is accompanied by a set of figures constituting an integral portion of the same, which by way of illustration and not limitation represent the following:
Figure 1 shows three views: a perspective view, an exploded view and a longitudinal cross-sectional view of a ball joint of the state of the art.
Figure 2 shows three views, like those of figure 1, of a first embodiment of the ball joint of the invention, wherein the upper body and lower body of the housing are joined by interior welding.
Figure 3 shows three views, like those of the preceding figures, of a second embodiment of the ball joint of the invention, wherein the upper body and lower body of the housing are joined by exterior welding.
Figure 4 shows three views, like those of the preceding figures, of a variant embodiment of the ball joint of the state of the art, where the housing is extended along one arm.
Figure 5 shows three views, like those of the preceding figures, of a third embodiment of the ball joint of the invention, wherein the upper body of the housing is extended along one arm.
Figure 6 shows three views, like those of the preceding figures, of a fourth embodiment of the ball joint of the invention, wherein the lower body of the housing is extended along one arm.

### PREFERRED EMBODIMENT OF THE INVENTION

In light of the figures discussed above, it may be seen how in one of the possible embodiments of the invention, the ball joint (A) that the invention proposes, comprises a metal housing (1), inside of which is housed, at least partially, a spherical portion (A') that has the ball joint (A).

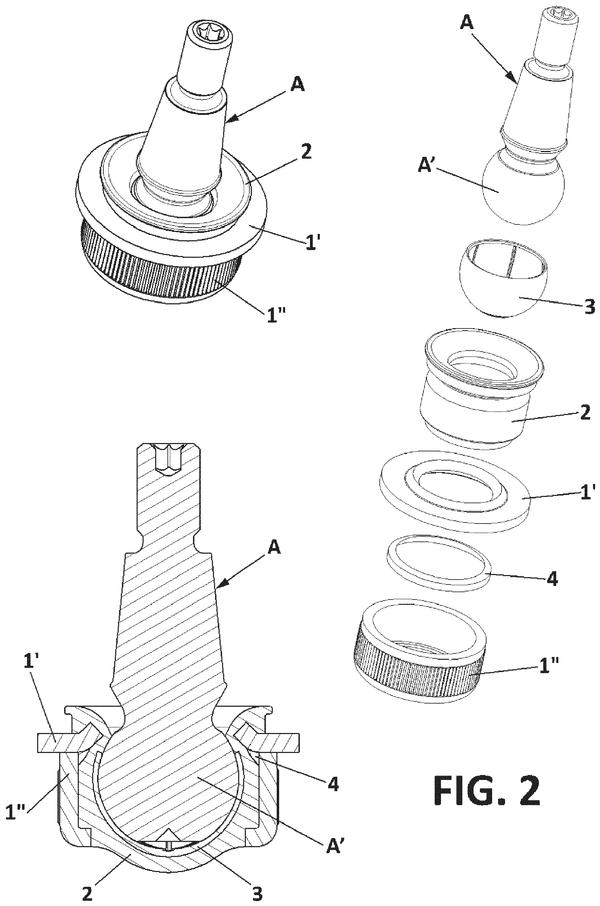

As can be seen in figures 2, 3, 5 and 6, in accordance with the invention, the housing (1) comprises an upper body (1') and a lower body (1") that are joined together.

Likewise, the ball joint comprises an overpressed piece (2) that holds the spherical portion (A') of the ball joint (A). As can be seen in figures 2, 3, 5 and 6, the overpressed piece (2) is located between the spherical portion (A') of the ball joint (A) and the inner faces of the upper body (1') and the lower body (1") of the housing (1).

In the embodiments shown in the figures, the ball joint comprises a plastic seat (3), the inner face of which is in contact with the spherical portion (A') of the ball joint (A), such that the outer face of the plastic seat (3) is in contact with the overpressed piece (2). Unlike the conventional seat (C) of the state of the art shown in figures 1 and 4, the plastic seat (3) of the invention is much thinner and is not intended to absorb loads, but rather it only constitutes an appropriate sliding surface for the spherical portion (A') of the ball joint (A). Furthermore, unlike the state of the art shown in figures 1 and 4, the plastic seat (3) of the invention completely surrounds the spherical portion (A') of the ball joint (A), including at the bottom, which contributes to the protection thereof.

The joint between the upper body (1') and the lower body (1") of the housing (1) is preferably made by welding (4). This ensures a sufficiently resistant joint between both parts of the housing (1).

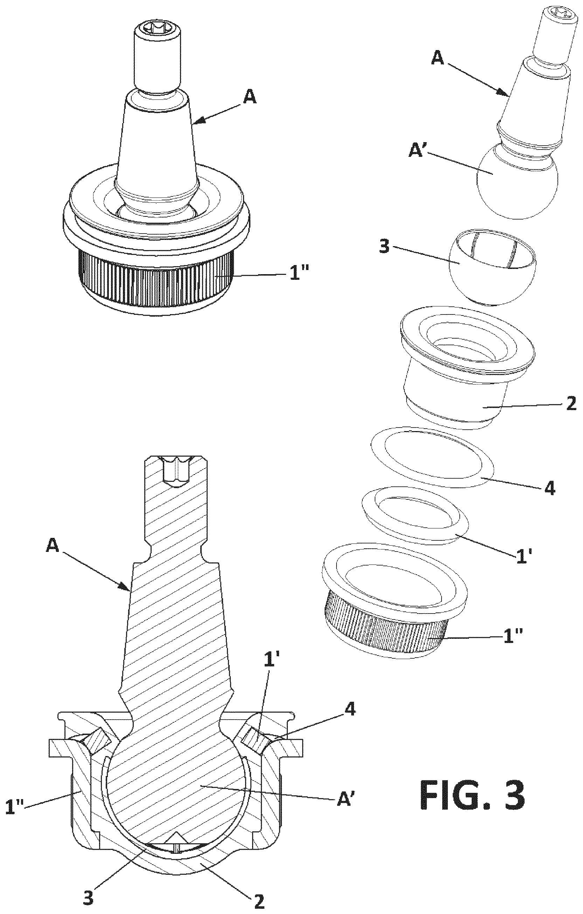

Figures 2 and 3 show two embodiments of the ball joint of the invention, wherein the lower body (1") of the housing (1) comprises a mainly central section that has a tubular, i.e. cylindrical, configuration, while the upper body (1') of the housing (1) has an annular, i.e. ring, configuration. As can be seen, the difference between both embodiments, in addition to the exact configuration of the upper body (1') and the upper portion of the lower body (1), is that in the embodiment of figure 2, welding (4) is interior, while in the case of the embodiment of figure 3, welding (4) is exterior. In this way, the upper body (1') is joined to the lower body (1") such that it holds the spherical portion (A') of the ball joint (A) from the top.

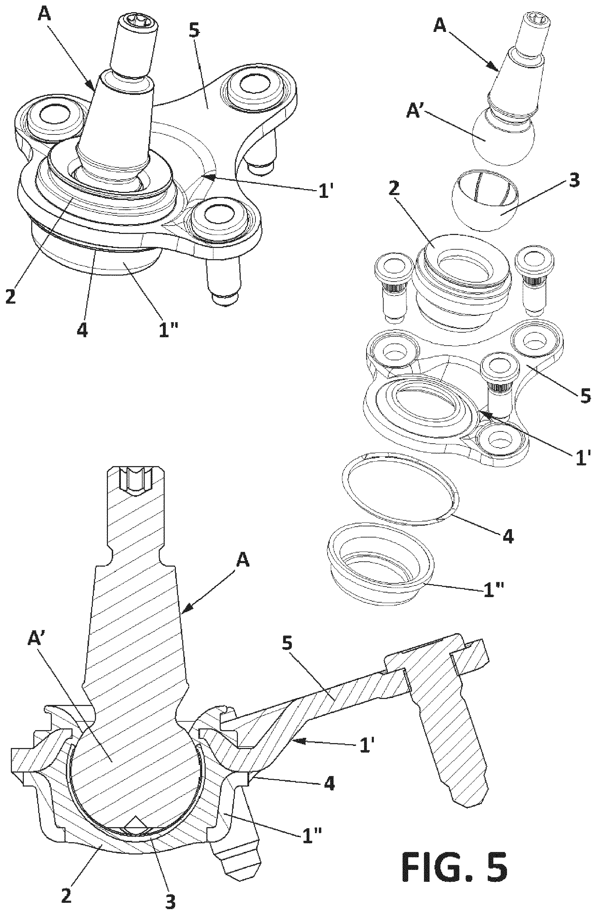

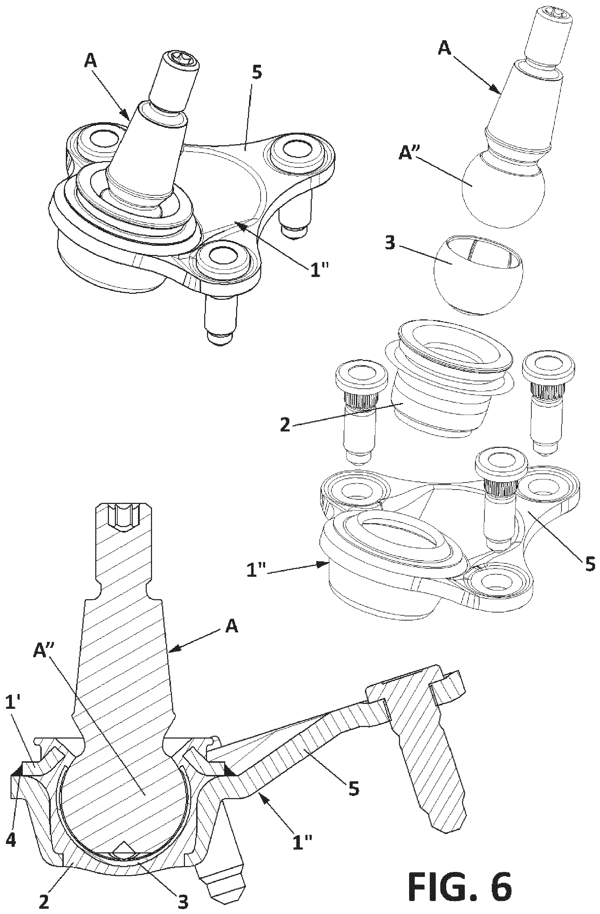

Furthermore, in figure 5 an embodiment of the ball joint is shown, wherein the upper body (1') is extended along at least one arm (5), while figure 6 shows an embodiment, wherein the lower body (1") is that which is extended along at least one arm (5).

A second aspect of the invention relates to a method for producing a ball joint such as the one previously described.

The method for producing the ball joint of the figures 2 and 3 comprises:
- producing the lower body (1") by means of shaping a tube and the upper body (1') by pressing,
- joining the lower body (1") to the upper body (1') by means of welding (4), whether it is interior or exterior.
- inserting through the lower portion of the housing (1) a ball joint (A) with a plastic seat (3) that is already fitted in the spherical portion (A') thereof; optionally, in the case of high demand, the housing (1) can be left without the closure shown in the figures and it can be closed later once the ball joint (A) with the seat (3) has been introduced, in order to have greater interference to prevent the ball joint (A) and seat (3) from protruding,
- fixing the position of the ball joint (A) and the housing (1),
- overpressing an overpressed piece (2), such that it holds the spherical portion (A') of the ball joint (A), being located between said spherical portion (A') of the ball joint (A) and the inner faces of the upper body (1') and lower body (1") of the housing (1).

The possibility that the method above comprises outer knurling on the lower body (1") of the housing (1) is envisaged. Knurling is carried out for reasons related to the tolerance of the outer portion and the relationship between the seat assembly and the piece in which it is embedded, usually a stabilizer, which is not shown in the figures.

The method for producing the ball joint of figures 5 and 6 comprises:
- producing the lower body (1") and upper body (1') by pressing,
- joining the lower body (1") to the upper body (1') by means of exterior welding (4), whether at the top or at the bottom, based on the location of the arm (5),
- inserting through the lower portion of the housing (1) a ball joint (A) with a plastic seat (3) that is already fitted in the spherical portion (A') thereof; similarly to the previous case, optionally, in the case of high demand, the housing (1) can be left without the closure shown in the figures and it can be closed later once the ball joint (A) with the seat (3) has been introduced, in order to have greater interference to prevent the ball joint (A) and seat (3) from protruding,
- fixing the position of the ball joint (A) and the housing (1),
- overpressing an overpressed piece (2), such that it holds the spherical portion (A') of the ball joint (A), being located between said spherical portion (A') of the ball joint (A) and the inner faces of the upper body (1') and lower body (1") of the housing (1).

In light of this description and the set of figures, a person skilled in the art will understand that the embodiments of the invention that have been described can be combined in multiple ways within the object of the invention. The invention has been described according to preferred embodiments thereof, but for the person skilled in the art, it will be evident that multiple variations can be introduced in said preferred embodiments without departing from the object of the claimed invention.

## Claims

1. A ball joint (A) that comprises a metal housing (1), inside of which is housed, at least partially, a spherical portion (A') that has the ball joint (A), **characterized in that** the housing (1) comprises an upper body (1') and a lower body (1") that are joined together, the seat assembly comprising an overpressed piece (2) that holds the spherical portion (A') of the ball joint (A), such that said overpressed piece (2) is located between said spherical portion (A') of the ball joint (A) and the inner faces of the upper body (1') and lower body (1") of the housing (1).

2. The ball joint according to claim 1, which comprises a plastic seat (3), the inner face of which is in contact with the spherical portion (A') of the ball joint (A), such that the outer face of the plastic seat (3) is in contact with the overpressed piece (2).

3. The ball joint according to any of the preceding claims, such that the joint between the upper body (1) and the lower body (1") of the housing (1) is made by means of welding (4).

4. The ball joint according to any of the preceding claims, wherein the lower body (1") of the housing (1) comprises a mainly central section that has a tubular configuration, while the upper body (1') of the housing (1) has an annular configuration.

5. The ball joint according to any of claims 1 to 3, wherein the upper body (1') is extended along at least one arm (5).

6. The ball joint according to any of claims 1 to 3, wherein the lower body (1") is extended along at least one arm (5).

7. A method for producing a ball joint according to any of claims 1 to 4, which comprises:
- producing the lower body (1") by means of shaping a tube and the upper body (1') by pressing,
- joining the lower body (1") to the upper body (1') by means of welding (4),
- inserting through the lower portion of the housing (1) a ball joint (A) with a plastic seat (3) that is already fitted in the spherical portion (A') thereof,
- fixing the position of the ball joint (A) and the housing (1),
- overpressing an overpressed piece (2) such that it holds the spherical portion (A') of the ball joint (A), being located between said spherical portion (A') of the ball joint (A) and the inner faces of the upper body (1') and lower body (1") of the housing (1).

8. The method according to claim 7, which comprises outer knurling on the lower body (1") of the housing (1).

9. The method for producing a ball joint according to any of claims 5 and 6, which comprises:
- producing the lower body (1") and upper body (1') by pressing,
- joining the lower body (1") to the upper body (1') by means of welding (4),
- inserting into the lower portion of the housing (1) a ball joint (A) with a plastic seat (3) that is already fitted in the spherical portion (A') thereof,
- fixing the position of the ball joint (A) and the housing (1),
- overpressing an overpressed piece (2) such that it holds the spherical portion (A') of the ball joint (A), being located between said spherical portion (A') of the ball joint (A) and the inner faces of the upper body (1') and lower body (1") of the housing (1).
